# EUROPÄISCHE PATENTANMELDUNG

(11) **EP 2 575 285 A2**
(43) Veröffentlichungstag der Anmeldung: **03.04.2013**
(21) Anmeldenummer: 12184853.5
(22) Anmeldetag: 18.09.2012
(51) Int. Cl.: H04L 9/00, F03B 13/00, F03B 13/10, F03B 17/06

(54) **Maritimes Rechenzentrum und Arbeitsverfahren**

(30) Priorität: 28.09.2011 DE 102011115657
(71) Anmelder: Fujitsu Technology Solutions Intellectual Property GmbH, 80807 München (DE)
(72) Erfinder: König, Christoph, 85521 Ottobrunn (DE)
(74) Vertreter: Epping - Hermann - Fischer

(57) **Zusammenfassung**

Die Erfindung betrifft ein maritimes Rechenzentrum, umfassend wenigstens ein Meeresenergiekraftwerk zur Erzeugung elektrischer Energie, wenigstens eine mit dem Meeresenergiekraftwerk elektrisch gekoppelte und von diesem versorgte Rechneranordnung (12) und wenigstens eine Kommunikationsvorrichtung zur nachrichtentechnischen Kopplung der Rechneranordnung (12) an ein Datennetzwerk.

Die Erfindung betrifft außerdem ein Arbeitsverfahren zur Ausführung wenigstens einer Datenverarbeitungsaufgabe in einer Anordnung umfassend wenigstens ein maritimes Rechenzentrum.

## Beschreibung

Die Anmeldung betrifft ein maritimes Rechenzentrum und ein Arbeitsverfahren zum Ausführen wenigstens einer Datenverarbeitungsaufgabe in einer Anordnung umfassend wenigstens ein maritimes Rechenzentrum.

Mit dem Begriff Rechenzentrum bezeichnet man im Allgemeinen Räumlichkeiten, in denen eine zentrale Rechentechnik, insbesondere eine Mehrzahl von Server-Rechnern, aber auch die zu deren Betrieb notwendige Infrastruktur, eines oder mehrerer Unternehmen oder Organisationen untergebracht ist. Dabei betreibt traditionell jedes Unternehmen bzw. jede Organisation ihr eigenes Rechenzentrum, beispielsweise in Form von Unternehmens- oder Universitäts-Rechenzentren.

Durch die zunehmende Virtualisierung von rechnergebundenen Dienstleistungen, wie Datenverarbeitung, -speicherung und -sicherung, verzichten vermehrt kleinere und mittlere Unternehmen auf den Betrieb eigener Rechenzentren und lagern ihre EDV-gestützten Prozesse in organisationsübergreifende Rechenzentren aus. Solche Rechenzentren sind oft auf verhältnismä-βig günstigen Gewerbeflächen angesiedelt, wobei der Zugriff auf die eigentlich bereitgestellten Rechenressourcen in der Regel über ein Datennetz, insbesondere das Internet, erfolgt.

Vor Ort in dem Rechenzentrum sind nur wenige Mitarbeiter anwesend, die sich im Wesentlichen um die Aufrechterhaltung der Infrastruktur, insbesondere die Kühlung der Rechner und deren Stromversorgung kümmern.

Durch die Konzentration von immer mehr Rechenleistung in einem einzelnen Rechenzentrum nehmen insbesondere die Probleme bei deren Abwärmemanagement zu. Die elektrischen und elektronischen Komponenten der Rechner verursachen bei ihrem Betrieb eine erhebliche Abwärme, die meist über Klimaanlagen und ähnliche Kühlvorrichtungen aus dem Rechenzentrum abgeführt werden muss. Dabei wird zusätzlich zu der zum Betrieb der Rechner benötigten elektrischen Energie weitere Energie zum Betreib der Kühlvorrichtungen benötigt. Rechenzentren sind daher in ihrem Betrieb sehr energieintensiv.

In Zeiten des Klimawandels besteht ein allgemeines Interesse daran, auch Rechenzentren möglichst umweltgerecht, insbesondere CO2-neutral zu betreiben. Aufgabe der vorliegenden Anmeldung ist es, ein grundlegend neues Konzept für Rechenzentren und Verfahren zu deren Betrieb zu beschreiben, die die Umwelt weniger belastet.

Gemäß einem ersten Aspekt der Erfindung wird ein maritimes Rechenzentrum beschrieben. Maritim bedeutet in diesem Zusammenhang, dass das Rechenzentrum in einer vom Meer bestimmten Umgebung unter Ausnutzung mariner Ressourcen betrieben wird. Das maritime Rechenzentrum umfasst wenigstens ein Meeresenergiekraftwerk zur Erzeugung elektrischer Energie, wenigstens eine mit dem Meeresenergiekraftwerk elektrisch gekoppelte und von diesem versorgte Rechneranordnung und wenigstens eine Kommunikationsvorrichtung zur nachrichtentechnischen Kopplung der Rechneranordnung an ein Datennetzwerk.

Das beschriebene maritime Rechenzentrum macht sich zum Einen zunutze, dass in den Meeren vorhandene Energie bislang nur zu einem sehr geringen Grad genutzt wird. Gleichzeitig macht sich die Erfindung zunutze, dass es wirtschaftlich günstiger ist, die von einer Rechneranordnung verarbeiteten Daten über ein Datennetzwerk zu übertragen, als Energie, die durch ein Meeresenergiekraftwerk erzeugt wird, in ein landgebundenes Energieversorgungsnetz zu übertragen.

Gemäß einer bevorzugten Ausgestaltung handelt es sich bei dem Meeresenergiekraftwerk um ein Strömungskraftwerk. Strömungskraftwerke sind grundsätzlich bekannt, haben im Bereich der Energieerzeugung aber noch keine breite Anwendung in industriellem Ausmaß gefunden, da die Energieübertragung zum Festland zusammen mit der relativ teuren Errichtung von Strömungskraftwerken ihren Betrieb im Allgemeinen unwirtschaftlich erscheinen lässt. Wird die Energie jedoch, wie bei dem beschriebenen maritimen Rechenzentrum, vor Ort genutzt, entfällt zumindest das Problem des Energietransports zum Festland, sodass eine wirtschaftliche Nutzung von Meeresenergiekraftwerken möglich ist.

Gemäß einer vorteilhaften Ausgestaltung ist das maritime Rechenzentrum dadurch gekennzeichnet, dass die Rechneranordnung wenigstens eine Daten verarbeitende und Hitze erzeugende elektronische Komponente aufweist, wobei die wenigstens eine Hitze erzeugende elektronische Komponente zur Kühlung thermisch mit umgebendem Meerwasser gekoppelt ist. Durch die thermische Kopplung einer Hitze erzeugenden Komponente mit dem ein maritimes Rechenzentrum umgebendes Meerwasser kann zudem die Kühlung einer Rechneranordnung deutlich vereinfacht und insbesondere ohne Aufwendung großer Mengen elektrischer Energie bewerkstelligt werden.

Gemäß einer weiteren vorteilhaften Ausgestaltung bilden das wenigstens eine Meeresenergiekraftwerk und die wenigstens eine Rechneranordnung eine gemeinsame, submarine Einheit. Ein derartiges, integriertes maritimes Rechenzentrum kann auf einfache Weise an verschiedenen Stellen im Meer versenkt werden und funktioniert dann weitgehend autonom ohne sichtbare Beeinflussung der Umwelt.

Gemäß einem zweiten Aspekt der Erfindung wird ein Arbeitsverfahren zum Ausführen wenigstens einer Datenverarbeitungsanlage in einer Anordnung umfassend wenigstens ein maritimes Rechenzentrum beschrieben. Das Arbeitsverfahren weist die folgenden Schritte auf:
- Bestimmen eines benötigten Energiebedarfs zur Ausführung der wenigstens einen Datenverarbeitungsaufgabe,
- Bestimmen einer Energiebilanz des wenigstens einen maritimen Rechenzentrums,
- Übermitteln der wenigstens einen Datenverarbeitungsaufgabe an das wenigstens eine maritime Rechenzentrum nur dann, wenn die bestimmte Energiebilanz anzeigt, dass in dem maritimen Rechenzentrum ausreichend Energie zur Ausführung der wenigstens einen Datenverarbeitungsaufgabe zur Verfügung steht, und
- Übermitteln der wenigstens einen Datenverarbeitungsaufgabe an ein anderes Rechenzentrum, wenn die bestimmte Energiebilanz anzeigt, dass in dem maritimen Rechenzentrum keine ausreichende Energie zur Ausführung der wenigstens einen Datenverarbeitungsaufgabe zur Verfügung steht.

Ein derartiges Arbeitsverfahren erlaubt die Zuteilung von Datenverarbeitungsaufgaben in Abhängigkeit einer vor Ort in einem maritimen Rechenzentrum zur Verfügung stehenden Energiebilanz. Somit können Datenverarbeitungsaufgaben an unterschiedliche Rechenzentren verteilt werden, wobei bevorzugt ein Rechenzentrum mit einer positiven ökologischen Energiebilanz ausgewählt wird.

Weitere vorteilhafte Ausgestaltungen der Erfindung sind in den abhängigen Patentansprüchen sowie der nachfolgenden ausführlichen Beschreibung von Ausführungsbeispielen offenbart.

Die Erfindung wird nachfolgend unter Bezugnahme auf unterschiedliche Ausführungsbeispiele anhand der angehängten Figuren näher beschrieben. In den Figuren zeigen:
- Figur 1: eine schematische Darstellung eines maritimen Rechenzentrums,
- Figur 2: eine schematische Darstellung einer submarinen Einheit zum Bereitstellen von Rechenleistung und
- Figur 3: ein Ablaufdiagramm eines Verfahrens zum Betreiben eines maritimen Rechenzentrums.

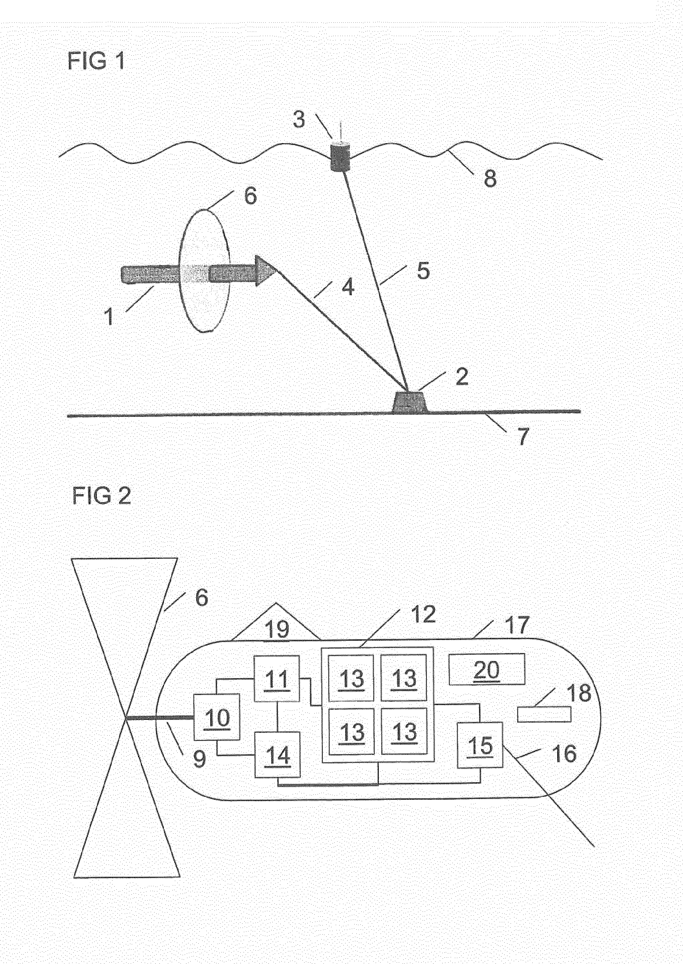

Figur 1 zeigt eine schematische Darstellung eines maritimen Rechenzentrums. Die in der Figur 1 dargestellte Anordnung umfasst eine submarine Einheit 1, einen auf dem Meeresgrund angeordneten Anker 2 sowie eine Boje 3.

Sowohl die submarine Einheit 1 als auch die Boje 3 sind über Schlepptrosse 4 bzw. 5 mit dem Anker 2 verbunden. Die Schlepptrosse 4 und 5 dienen dabei gleichzeitig zum Festhalten der submarinen Einheit 1 und der Boje 3 in einem vorbestimmten Bereich des Meeres als auch zum Übertragen von Daten zwischen der submarinen Einheit 1 und der Boje 3. Optional können weitere submarine Einheiten und/oder weitere Bojen 3 zu einem lokalen Verbund gekoppelt werden.

Die submarine Einheit 1 enthält eine Rechneranordnung mit einem oder mehreren Rechnern, insbesondere einer Vielzahl von standardisierten, wartungsarmen Server-Rechnern. An einer Au-βenseite der submarinen Einheit 1 ist ein Rotor 6 angeordnet, der sich bezüglich der feststehenden submarinen Einheit 1 zu drehen beginnt, wenn diese in einer Meeresströmung angeordnet wird. Der Rotor 6 treibt eine im Inneren der submarinen Einheit 1 angeordnete Generatoreinheit an, die basierend auf der kinetischen Energie des Rotors 6 elektrische Energie zum Betreiben der Rechneranordnung erzeugt.

Im dargestellten Ausführungsbeispiel wird die submarine Einheit 1 über die erste Schlepptrosse 4 in einer mittleren Wassertiefe gehalten, sodass die submarine Einheit 1 weder mit dem Meeresgrund 7 noch mit der Wasseroberfläche 8 in Kontakt tritt. Hierzu ist beispielsweise in der submarinen Einheit 1 oder dem Anker 2 eine elektrische Winde vorgesehen, die die Länge des ersten Schlepptrosses 4 auf eine geeignete Länge einstellt. Durch Verlängern der ersten Schlepptrosse 4 kann die submarine Einheit 1 zur Wartung auch an die Wasseroberfläche 8 gebracht werden. Die im Wasser schwebende Anordnung der submarinen Einheit 1 eignet sich wegen ihrer einfachen Montage auch zur Energiegewinnung für andere Anlagen als das hier beschriebene maritime Rechenzentrum.

Alternativ kann die submarine Einheit 1 selbstverständlich auch fest an einem auf konventionelle Weise mit dem Meeresgrund verbundenen Gerüst montiert werden.

Die in dem Inneren der submarinen Einheit 1 angeordnete Rechneranordnung arbeitet weitgehend autonom. Insbesondere können ihr über eine Fernzugriffssteuerung Datenverarbeitungsaufgaben zugeteilt werden, die dann von den Rechnern der Rechneranordnung ausgeführt werden.

Zum Zuordnen von neuen Datenverarbeitungsaufgaben sowie zur Kommunikation der Ergebnisse der ausgeführten Datenverarbeitungsaufgaben für an Land befindliche Benutzer oder weitere Prozesse dient im in der Figur 1 dargestellten Ausführungsbeispiel die Boje 3. In die Boje 3 ist ein Transceiver zur Funkübertragung von Daten zwischen der submarinen Einheit 1 und einer an Land befindlichen Basisstation angeordnet. In Abhängigkeit der Anordnung der submarinen Einheit 1 kann es sich dabei um eine direkte Funkverbindung zu einer Basisstation an Land oder um eine indirekte Funkverbindung, insbesondere unter Vermittlung eines Satelliten, handeln.

In einer weiteren, nicht dargestellten Ausgestaltung wird an Stelle der an der Wasseroberfläche 8 befindlichen Boje 3 ein Fesselballon mit einer daran angeordneten Funk-Relais-Station als Kommunikationsvorrichtung verwendet. Durch die Verwendung eines Fesselballons anstelle der Boje 3 kann insbesondere die Kommunikationsreichweite eines darin angeordneten Senders erhöht werden.

Alternativ ist es auch möglich, die Rechneranordnung der submarinen Einheit 1 direkt oder indirekt mit einer Glasfaser- oder sonstigen Kommunikationsleitung auf dem Meeresgrund zu verbinden. Beispielsweise kann bei Anordnung des maritimen Rechenzentrums in Küstennähe eine verhältnismäßig kurze Glasfaserleitung zwischen einer landbasierten Basisstation und dem Anker 2 der submarinen Einheit 1 verlegt werden. Bei der Anordnung des maritimen Rechenzentrums in der Tiefsee in großer Entfernung vom Land bietet es sich hingegen an, eine Verbindung der submarinen Einheit 1 mit einem neu verlegten Unterseekabel bereits beim dessen Verlegung herzustellen.

Neben der beschriebenen Glasfasertechnik sind selbstverständlich auch andere Kommunikationsmedien, die eine Datenübertragung mit einer ausreichend hohen Bandbreite ermöglichen, zur Verwendung mit der beschriebenen submarinen Einheit 1 geeignet.

Die submarine Einheit 1 mit dem Rotor 6 bildet eine besonders einfache Form eines Strömungskraftwerks. Strömungskraftwerke haben gegenüber anderen regenerativen Energiegewinnungsmethoden den Vorteil, dass durch die höhere Dichte von Wasser eine deutliche höhere Energieausbeute pro Quadratmeter Rotorfläche möglich ist, als dies von Windkraftwerken bekannt ist. Beispielsweise ergibt sich bei einer angenommenen Meeresströmungsgeschwindigkeit von 2 m/s, einem Rotordurchmesser von 30 m und einem Wirkungsgrad von 50 % bereits eine mögliche elektrische Leistung von etwa 1400 kW. Zur Erlangung einer vergleichbaren elektrischen Leistung unter Verwendung eines Windkraftwerks mit demselben Wirkungsgrad wäre dagegen ein Rotordurchmesser von über 100 m bei einer angenommenen Windgeschwindigkeit von 8 m/s erforderlich.

Aus der höheren Energiedichte von Meeresströmungen ergibt sich eine Reihe von Vorteilen bei dem Betrieb von Strömungskraftwerken gegenüber Windkraftwerken. Zum einen können die Strukturen wesentlich kleiner gehalten werden, was einen verminderten Platzbedarf bei der Aufstellung und verminderten Aufwand bei deren Konstruktion bedeutet. Zum anderen stören sie die Umwelt erheblich weniger, da sie zum einen von der Meeresoberfläche her nicht wahrnehmbar sind und zum anderen durch die verhältnismäßig langsam rotierenden Rotoren nur eine geringfügige Beeinflussung des Unterwasser-Lebensraums darstellen.

Bei Installation in verhältnismäßig großer Entfernung zu einer Küste und verhältnismäßig großer Tiefe stellen sie auch keine Behinderung der Schifffahrt dar. Zudem treten in größeren Tiefen wetterunabhängige, weitgehende konstante Meeresströmungen auf, die eine kontinuierliche Energieausbeute ohne Vorhandensein einer erheblichen Sturmgefährdung bedeuten.

Neben den beschriebenen Strömungskraftwerken können auch andere Formen von Meereskraftwerken zur elektrischen Energieversorgung von maritimen Rechenzentren genutzt werden. Beispielsweise ist es möglich, Wellenkraftwerke, Meereswärmekraftwerke oder Offshore-Windparks zur Versorgung von Rechneranordnungen in einer maritimen Umgebung, insbesondere im Hochseebereich, also in internationalen Gewässern, zu verwenden.

Bei dem Verbrauch der elektrischen Energie vor Ort tritt der zusätzliche Vorteil auf, dass keine verhältnismäßig aufwändig zu verlegenden und teueren Kupferkabel zur Übertragung der gewonnenen elektrischen Energie an Land installiert werden müssen.

Zusätzlich wird die Energieaufnahme der Rechneranordnung in der submarinen Einheit 1 gegenüber einer vergleichbaren an Land aufgestellten Rechneranordnung dadurch reduziert, dass ihre Kühlung bevorzugt passiv, insbesondere durch Wärmeleitung an einer Außenfläche der submarinen Einheit 1, bewirkt werden kann. Damit ist das beschriebene Rechenzentrum nicht nur CO2-neutral, sondern auch energieneutral in dem Sinne, dass die über die Außenhaut der submarinen Einheit 1 abgegebene Abwärme der Rechneranordnung der vorher entnommenen Strömungsenergie entspricht, die wiederum durch Temperaturunterschiede im Meer hervorgerufen wird.

Figur 2 zeigt schematisch den Aufbau der submarinen Einheit 1 bezüglich der darin angeordneten Komponenten. Die submarine Einheit 1 umfasst einen über eine Rotorwelle 9 mechanisch mit dem Rotor 6 verbundenen Generator 10. Der Generator 10 erzeugt elektrische Energie, die von einer Wandlerschaltung 11 in eine geeignete, stabilisierte Versorgungsspannung für eine Rechneranordnung 12, umfassend eine Mehrzahl von Einzelrechnern 13, umgewandelt wird. Sofern sämtliche Komponenten der submarinen Einheit 1 mit einer von dem Generator 10 erzeugten Gleichspannung versorgt werden können, kann auf eine Wechsel- und nachfolgende Gleichrichtung, wie sie von landbasierten Energieversorgungsnetzen bekannt ist, verzichtet werden, was deren Energieeffizient noch weiter verbessert. Bevorzugt umfasst die Wandlerschaltung 11 einen oder mehrere Energiespeicher, insbesondere Akkumulatoren mit hoher Speicherkapazität zum Ausgleichen kurzfristiger Abrisse der Meeresströmung oder zum Ausgleich von Leistungsspitzen in der Energieaufnahme.

Die Wandlerschaltung 11 sowie der Generator 10 werden von einem Steuerrechner 14 überwacht. Stellt der Steuerrechner 14 fest, dass nicht genügend elektrische Energie zum Betrieb sämtlicher Einzelrechner 13 zur Verfügung steht, steuert er die Einzelrechner 13 der Rechneranordnung 12 in geeigneter Weise, beispielsweise durch bekannte Scheduling-Algorithmen, an, um einzelne Rechner 13 herunterzufahren und so die Energieaufnahme der Rechneranordnung 12 zu reduzieren. Steht überhaupt keine elektrische Energie oder nur sehr wenig elektrische Energie zur Verfügung, fährt der Steuerrechner 14 die submarine Einheit 1 in einen Bereitschaftszustand. Hierzu übertragen die Einzelrechner 13 geeignete Steuerdaten an eine an Land befindliche Basisstation oder an andere, über ein Datennetzwerk erreichbare submarine Einheiten, die die Ausführung der zuvor von den Einzelnrechnern 13 durchgeführten Datenverarbeitungsaufgaben übernehmen. Zur Kommunikation mit der Außenwelt und insbesondere den Nutzern der Rechneranordnung 12 dient ein Transceiver 15, der die Rechneranordnung 12 über einen Lichtwellenleiter 16 direkt oder indirekt, beispielsweise über die Funkboje 3, mit einem Datennetzwerk, insbesondere dem Internet, koppelt.

Die einzelnen Rechner 13 stehen thermisch in Kontakt mit einer Außenwand 17 der submarinen Einheit 1. Beispielsweise können einzelne Prozessoren über so genannte Heat Pipes mit der Außenwand 17 gekoppelt werden. Alternativ ist es auch möglich, die Einzelrechner 13 durch konventionelle Kühlanordnungen, insbesondere bekannte Fluid-Kühlungen, zu kühlen, wobei die erzeugte Wärmeenergie durch ein zur Kühlung verwendetes Fluid wie Luft oder Wasser letztendlich wiederum an die Außenwand 17 abgeführt wird.

Neben bekannten Luftkühlungen können dabei auch andere Kühlmedien eingesetzt werden. Insbesondere für den langfristigen Betrieb der submarinen Einheit 1 bietet es sich an, diese anstatt mit Luft mit einem Schutzgas, wie beispielsweise Stickstoff, Helium oder Argon, zu befüllen. Durch den weitgehenden Ausschluss von Luft aus der submarinen Einheit 1 kann dabei die Korrosion der darin angeordneten Komponenten reduziert werden, sodass ein langfristiger, wartungsfreier Betrieb der submarinen Einheit 1 möglich ist.

In einer weiteren, in den Figuren nicht dargestellten Ausgestaltung umfasst die submarine Einheit zusätzliche eine Wärmekraftmaschine zur Erzeugung elektrischer Energie basierend auf einer Energierückgewinnung. Wie in der DE 102007053219 A1 beschrieben können Wärmekraftmaschinen bei einer Temperaturdifferenz von beispielsweise 50° zwischen der Temperatur einer Hitze erzeugenden Komponente, wie etwa einem Prozessor eines Einzelrechners 13, und dem umgebenden Meerwasser eingesetzt werden, um zusätzliche elektrische Energie zurück in die Energieversorgung der submarinen Einheit 1 einzuspeisen. Hierbei ist wiederum von Vorteil, dass durch die verhältnismäßig geringe Temperatur des umgebenden Meerwassers die zum effektiven Betrieb einer Energierückgewinnungsanlage erforderliche Temperaturdifferenz in einem maritimen Rechenzentrum einfacher als an Land gewonnen werden kann.

Die in der Figur 2 dargestellte submarine Einheit 1 umfasst des Weiteren an der Außenseite angeordnete Ruder 18 und 19 zum Ausrichten der submarinen Einheit 1 in einer Meeresströmung. Im Ausführungsbeispiel werden die Ruder 18 und 19 von dem Steuerrechner 14 angesteuert, der ebenfalls mit geeigneten Sensoren zur Lagebestimmung verbunden ist. Darüber hinaus umfasst die submarine Einheit 1 ein oder mehrere Auftriebskörper, die, wie aus dem U-Boot-Bau bekannt, zum kontrollierten Trimmen, Aufsteigen bzw. Absinken der submarinen Einheit 1 eingesetzt werden können. Alternativ ist es auch möglich, die submarine Einheit 1 so zu gestalten, dass sie ohne Einwirkung äußerer Kräfte stets an eine Wasseroberfläche 8 treibt. In diesem Fall kann beispielsweise eine an der ersten Schlepptrosse 4 angeordnete Motorwinde dafür sorgen, dass die submarine Einheit 1 im Normalbetrieb unter die Wasseroberfläche 8 abgesenkt wird.

In einer alternativen, nicht dargestellten Ausgestaltung handelt es sich bei dem Meeresenergiekraftwerk um ein fest mit dem Meeresgrund 7 verbundenes Strömungskraftwerk, dessen Rotor 6 und Generator 10 an einem Mast oder Gerüstbeinen befestigt sind. Die zugehörige Rechneranordnung 12 kann dabei in demselben Bauteil wie der Generator 10 oder in einer gesonderten, entweder auf dem Meeresgrund 7 oder an der Wasseroberfläche 8 angeordneten Vorrichtung untergebracht sein.

Beispielsweise ist es möglich, wie bei Bohrinseln eine über Gerüstbeine mit dem Meeresgrund 7 verbundene Plattform zu errichten, die über die Wasseroberfläche 8 hinaus ragt. Auf der Plattform kann dann die Rechneranordnung 12 ähnlich wie in einem konventionellen Rechenzentrum angeordnet werden, sodass insbesondere eine vereinfachte Zugänglichkeit für deren Wartung gewährleistet ist. Ein oder mehrere Strömungskraftwerke können dabei unterhalb der Plattform, insbesondere an den zur Befestigung der Plattform verbundenen Gerüstbeine angeordnet werden, wobei diese ihre Energie über verhältnismäßig kurze elektrische Leitungen an die Rechneranordnung 12 auf der Plattform übertragen. Eine derartige Anordnung besitzt unter anderem den Vorteil, dass auf der vom Seegang unabhängigen Plattform eine verhältnismäßig große Parabolantenne zur Ankopplung des maritimen Rechenzentrums an einen Satelliten erricht werden kann.

Die Zuordnung von Datenverarbeitungsaufgaben zu den beschriebenen maritimen Rechenzentren erfolgt bevorzugt über die so genannte Grid-Technologie, bei der Daten und gegebenenfalls zur Verarbeitung der Daten erforderliche Programme verschiedenen Knoten eines Datenverarbeitungsnetzwerks mit einer Vielzahl von räumlich verteilten Rechnerknoten zugeteilt werden. Bevorzugt steuert dazu eine an Land befindliche Basisstation eine Mehrzahl von maritimen oder sonstigen Rechenzentren an und teilt ihnen die zur Verfügung stehenden Datenverarbeitungsaufgaben in Abhängigkeit deren Einsatzbereitschaft und Energieversorgung zu.

Wird ein erstes maritimes Rechenzentrum wegen erforderlicher Wartungsarbeiten oder wegen eines Zusammenbruchs einer lokalen Meeresströmung vorübergehend heruntergefahren, weist die Landstation die bisher durch das maritime Rechenzentrum ausgeführten Datenverarbeitungsaufgaben sowie eventuell neu zu erstellende Datenverarbeitungsaufgaben beispielsweise einem anderen, in einem anderen Meeresbereich angeordneten maritimen Rechenzentrum zu. Steht auch dort nicht genügend elektrische Leistung oder Rechenleistung zur Verfügung, um sämtliche Datenverarbeitungsaufgaben auszuführen, können diese auch einem an Land befindlichen Rechenzentrum zugewiesen werden, das in herkömmlicher Weise mit einem konventionellen Energieversorgungsnetz gekoppelt ist. Steht wiederum ausreichend Energie in den maritimen Rechenzentren zur Verfügung, werden die Aufgaben von dem konventionellen Rechenzentrum abgezogen und statt dessen einem maritimen Rechenzentrum zugeordnet, um die Datenverarbeitungsaufgaben möglichst CO2-neutral zu erledigen.

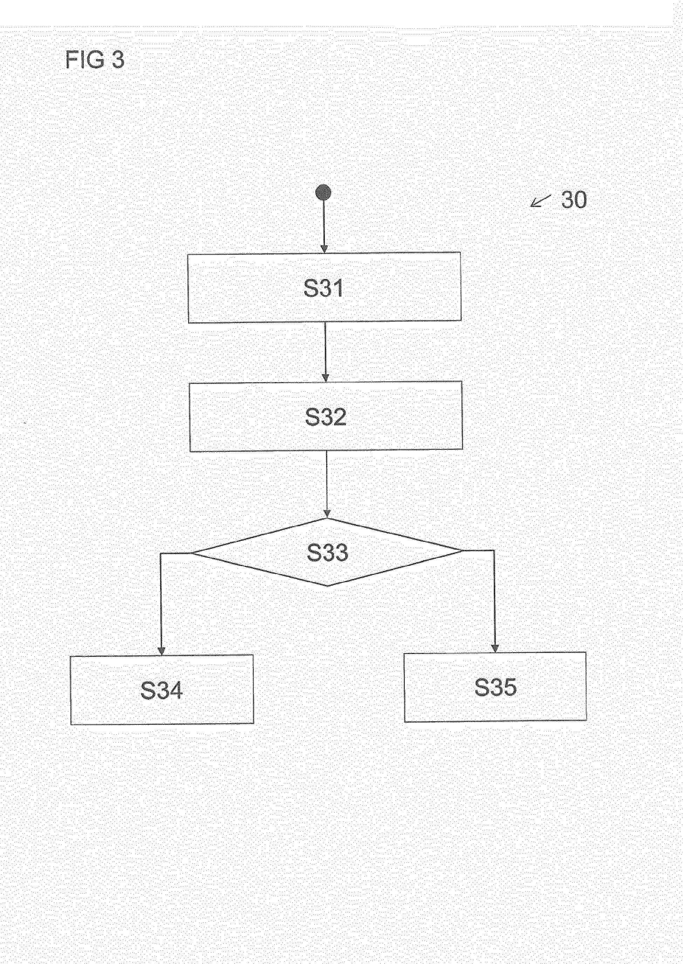

Figur 3 zeigt schematisch ein Verfahren 30 zum Betrieb eines maritimen Rechenzentrums.

In einem ersten Schritt S31 wird eine Datenverarbeitungsaufgabe an eine Management-Einheit, beispielsweise ein an Land befindliche Basisstation oder einen in der submarinen Einheit 1 angeordneten Steuerrechner 14 übertragen.

In einem zweiten Schritt S32 wird die voraussichtlich durch Ausführung der Datenverarbeitungsaufgabe benötigte elektrische Energie bestimmt. Beispielsweise kann die zur Ausführung benötigte oder angeforderte Anzahl von Prozessoren mit deren durchschnittlicher Energieaufnahme multipliziert werden.

In einem dritten Schritt S33 wird überprüft, ob die voraussichtlich benötigte Energie aktuell in der submarinen Einheit 1 zur Verfügung steht und/oder durch den darin angeordneten Generator 10 erzeugt werden kann.

Ist dies der Fall, wird die Datenverarbeitungsaufgabe in einem Schritt S34 von der Rechneranordnung 12 des maritimen Rechenzentrums ausgeführt.

Anderenfalls wird die Datenverarbeitungsaufgabe im Schritt S35 einem anderen Rechenzentrum, beispielsweise einem anderen maritimen Rechenzentrum oder einem an Land befindlichen, konventionellen Rechenzentrum, zugewiesen.

### Bezugszeichenliste

- 1: submarine Einheit
- 2: Anker
- 3: Boje
- 4: erste Schlepptrosse
- 5: zweite Schlepptrosse
- 6: Rotor
- 7: Meeresgrund
- 8: Wasseroberfläche
- 9: Rotorwelle
- 10: Generator
- 11: Wandlerschaltung
- 12: Rechneranordnung
- 13: Einzelrechner
- 14: Steuerrechner
- 15: Transceiver
- 16: Lichtwellenleiter
- 17: Außenwand
- 18: Ruder
- 19: Ruder
- 20: Auftriebskörper

## Patentansprüche

1. Maritimes Rechenzentrum, umfassend:
- wenigstens ein Meeresenergiekraftwerk zur Erzeugung elektrischer Energie;
- wenigstens eine mit dem Meeresenergiekraftwerk elektrische gekoppelte und von diesem versorgte Rechneranordnung (12); und
- wenigstens eine Kommunikationsvorrichtung zur nachrichtentechnischen Kopplung der Rechneranordnung (12) an ein Datennetzwerk.

2. Maritimes Rechenzentrum nach Anspruch 1,
**dadurch gekennzeichnet, dass**
das wenigstens eine Meeresenergiekraftwerk als Strömungskraftwerk ausgestaltet ist.

3. Maritimes Rechenzentrum nach Anspruch 1 oder 2,
**dadurch gekennzeichnet, dass**
die Rechneranordnung (12) wenigstens eine Daten verarbeitende und Hitze erzeugende elektronische Komponente aufweist, wobei die wenigstens eine Hitze erzeugende elektronische Komponente zur Kühlung thermisch mit umgebendem Meerwasser gekoppelt ist.

4. Maritimes Rechenzentrum nach Anspruch 3,
**gekennzeichnet durch** wenigstens eine Wärmekraftmaschine zur Erzeugung elektrischer Energie basierend auf einer Temperaturdifferenz zwischen der wenigstens einen Hitze erzeugenden Komponente und dem umgebenden Meerwasser, wobei die wenigstens eine Wärmekraftmaschine zur Energieversorgung der Rechneranordnung (12) elektrisch mit dieser gekoppelt ist.

5. Maritimes Rechenzentrum nach einem der Ansprüche 1 bis 4,
**dadurch gekennzeichnet, dass**
die wenigstens eine Kommunikationsvorrichtung eine Funk-Relais-Station, insbesondere eine Funkboje (3), und/oder einen Glasfaser-Transceiver (15) zur Ankopplung der Rechneranordnung (12) an eine submarine Glasfaserleitung umfasst.

6. Maritimes Rechenzentrum nach einem der Ansprüche 1 bis 5,
**dadurch gekennzeichnet, dass**
das wenigstens eine Meeresenergiekraftwerk und die wenigstens eine Rechneranordnung (12) eine gemeinsame submarine Einheit (1) bilden.

7. Maritimes Rechenzentrum nach Anspruch 6,
**dadurch gekennzeichnet, dass**
die eine submarine Einheit (1) über eine Schlepptrosse (4) mit einem ortsfesten Anker (2) verbunden ist.

8. Maritimes Rechenzentrum nach Anspruch 6 oder 7,
**dadurch gekennzeichnet, dass**
die eine submarine Einheit (1) wenigstens einen Auftriebskörper (20) und eine Steuereinheit (14) aufweist, wobei die Steuereinheit (14) dazu eingerichtet ist, die submarine Einheit (1) zu Wartungszwecken an die Wasseroberfläche (8) aufsteigen zu lassen.

9. Maritimes Rechenzentrum nach einem der Ansprüche 6 bis 8,
**dadurch gekennzeichnet, dass**
die submarine Einheit (1) mit einer reaktionsarmen Schutzgasatmosphäre gefüllt ist.

10. Maritimes Rechenzentrum nach einem der Ansprüche 1 bis 9, **gekennzeichnet durch** eine Management-Einheit, wobei die Management-Einheit dazu eingerichtet ist, die Menge der von dem Meereskraftwerk erzeugten elektrischen Energie zu überwachen und wenigstens eine **durch** die Rechneranordnung (12) ausgeführte Datenverarbeitungsaufgabe an eine entfernte Rechneranordnung zu übertragen, wenn die Menge der erzeugten elektrischen Energie zur Ausführung der wenigstens einen Datenverarbeitungsaufgaben nicht ausreicht.

11. Arbeitsverfahren zum Ausführen wenigstens einer Datenverarbeitungsaufgabe in einer Anordnung, umfassend wenigstens ein maritimes Rechenzentrum nach einem der Ansprüche 1 bis 10, mit den Schritten:
- Bestimmen eines benötigten Energiebedarfs zur Ausführung der wenigstens einen Datenverarbeitungsaufgabe;
- Bestimmen einer Energiebilanz des wenigstens einen maritimen Rechenzentrums;
- Übermitteln der wenigstens einen Datenverarbeitungsaufgabe an das wenigstens eine maritime Rechenzentrum nur dann, wenn die bestimmte Energiebilanz anzeigt, dass in dem maritimen Rechenzentrum ausreichend Energie zur Ausführung der wenigstens einen Datenverarbeitungsaufgabe zur Verfügung steht; und
- Übermitteln der wenigstens einen Datenverarbeitungsaufgabe an ein anderes Rechenzentrum, wenn die bestimmte Energiebilanz anzeigt, dass in dem maritimen Rechenzentrum keine ausreichende elektrische Energie zur Ausführung der wenigstens einen Datenverarbeitungsaufgabe zur Verfügung steht.
